# EUROPÄISCHE PATENTSCHRIFT

(11) **EP 1 584 863 B1**
(45) Veröffentlichungstag und Bekanntmachung des Hinweises auf die Patenterteilung: **12.11.2008**
(21) Anmeldenummer: 05006901.2
(22) Anmeldetag: 30.03.2005
(51) Int. Cl.: F21V 5/00, F21V 5/04

(54) **Beleuchtungseinrichtung mit Linse und Herstellverfahren für eine solche**
Lighting device with lens and method of fabricating for such
Dispositif d'éclairage avec lentille et son procédé de fabrication

(30) Priorität: 08.04.2004 DE 102004018424
(43) Veröffentlichungstag der Anmeldung: 12.10.2005
(73) Patentinhaber: Schott AG, 55122 Mainz (DE)
(72) Erfinder: Moseler, Doris, 55257 Budenheim (DE); Ebeling, Polina, 55262 Heidesheim (DE); Körner, Steffen, 31073 Delligsen (DE); Bonitz, Ralf, 55271 Stadecken-Elsheim (DE); Peters, Frank, 31073 Delligsen (DE); Larm, Helmut, 31061 Alfeld (DE)
(74) Vertreter: Gahlert, Stefan

(56) Entgegenhaltungen:
- EP-A1- 0 641 967
- WO-A-03/107063
- GB-A- 2 248 493
- JP-A- 9 328 322

## Beschreibung

Die Erfindung betrifft ein Verfahren zur Herstellung einer solchen Linse Beleuchtungszwecke, insbesondere eine Linse für einen Scheinwerfer zur Abbildung des von einer Lichtquelle ausgesandten und einem Reflektor reflektierten Lichtes zur Erzeugung eines vorgegebenen Beleuchtungsmusters.

Eine derartige Linse ist aus der WO 03/107063 A bekannt.

Die bekannte Linse weist eine eingeprägte, wellenförmig verlaufende Feinstruktur auf ihrer optisch aktiven Oberfläche auf, über die eine wellenförmig verlaufende Mikrostruktur eingeprägt ist. Hierdurch wird ein Weichzeicheneffekt erzielt, der insbesondere für einen weichen Übergang an der Hell-Dunkel-Grenze bei Kfz-Scheinwerfern geeignet ist.

Allerdings ist die betreffende Linse wegen ihrer kompliziert geformten Oberfläche sehr aufwendig herstellbar oder benötigt ggf. eine entsprechende Nachbearbeitung der Oberfläche.

Aus der GB-A-2 248 493 ist ferner ein Kfz-Scheinwerfer bekannt, bei dem eine Linse verwendet wird, die in ihrem zentralen Bereich stärker gekrümmt ist und ggf. mit einer Körnung versehen ist.

Die Erfindung betrifft ferner eine Form zur Herstellung einer solchen Linse durch Heißpressen.

Aus Patent Abstracts of Japan 09 328 322 ist ein Verfahren und eine zweiteilige Form zur Herstellung eines optischen Rohlings bekannt. An einer Formfläche der Form sind Bereiche mit unterschiedlicher Oberflächenrauhigkeit ausgebildet.

Seit Mitte der achtziger Jahre wird für Automobile der Ober- und oberen Mittelklasse der sogenannte "Poly-Ellipsoid-Scheinwerfer" (PES) angeboten, der anstelle der Streulichtscheibe eine Plan-Asphäre als Linse besitzt, die auf einen Dreifach-Ellipsoid-Reflektor oder in neuerer Zeit auch auf Freiformflächenreflektoren abgestimmt ist.

Ein derartiger Ellipsoid-Scheinwerfer (im Folgenden allgemein als "PES-Scheinwerfer" bezeichnet) ist z.B. in der DE 198 44 235 A1 beschrieben. Der dort beschriebene PES-Scheinwerfer umfasst einen Reflektor, der aus einem Ellipsenabschnitt besteht und eine einzige Lichtquelle aufweist, die im Bereich des ersten Brennpunktes des Reflektors angeordnet ist. In diesem Scheinwerfer ist in einem Abstand vom Reflektor eine plankonvexe Linse vorgesehen, deren Brennpunkt in einem Bereich des zweiten Brennpunktes des Reflektors liegt. Die von der Lichtquelle in Richtung des Reflektors abgestrahlten Strahlen werden reflektiert, und die reflektierten Strahlen, die in der Zone des zweiten Brennpunktes des Reflektors konvergieren, gehen durch die Linse hindurch und treten aus dem Scheinwerfer entlang einer Richtung aus, die annähernd parallel zur Achse der plan-konvexen Linse verläuft. Zwischen dem Reflektor und der plan-konvexen Linse ist eine Blende eingefügt, die in einem Bereich des zweiten Brennpunktes des Reflektors positioniert ist. Sie weist eine entsprechend angepasste Form auf, damit das vom Scheinwerfer ausgehende Lichtbündel die vorgeschriebene Hell-Dunkel-Grenze (HDG) erfüllt.

Für PES-Scheinwerfer gelten enge gesetzliche Spezifikationen, um eine Blendung des Gegenverkehrs zu vermeiden. Hierzu gibt es diverse Vorgaben für die in bestimmten Richtungen und Entfernungen des abgestrahlten Lichtbündels einzuhaltenden Beleuchtungsstärken. Darüber hinaus muss die naturgemäß auftretende Farbstreuung auf ein bestimmtes Maß begrenzt werden. Ferner ist eine präzise Einstellbarkeit der Hell-Dunkel-Grenze des Scheinwerfers gefordert, die eindeutig sein muss und nicht von relativen Farbmaxima beeinträchtigt werden darf.

In einschlägigen nationalen Prüfnormen wird z.B. die Lichtverteilung eines Scheinwerfers auf einer 25 m entfernten Messwand in verschiedene Zonen eingeteilt und eine Vielzahl von Prüfpunkten definiert. Ein bedeutender Parameter hierbei ist die Beleuchtungsstärke im so genannten HV-Punkt, der 25 cm oberhalb der Hell-Dunkel-Grenze in der Mitte des Lichtstrahls liegt. Dort darf die Beleuchtungsstärke einen definierten Wert nicht überschreiten. Der HV-Punkt liegt im Dunkelbereich der Lichtverteilung. Bei zu unscharfer Abbildung verbreitert sich die Hell-Dunkel-Grenze, und die Beleuchtungsstärke im HV-Punkt kann den zulässigen Grenzwert übersteigen.

Andererseits ist für bestimmte PES-Scheinwerfer an der Hell-Dunkel-Grenze (HDG) ein relativ weicher Übergang vom hellen zum dunklen Bereich gefordert, was im so genannten HDG-Wert zum Ausdruck kommt, der innerhalb eines gewissen Toleranzbereiches liegen soll.

Da für das gesamte Scheinwerfersystem die verschiedenen Einzelkomponenten, insbesondere Reflektor und Linse, optimal aufeinander abgestimmt sein müssen, werden von den Scheinwerfer-Herstellern teilweise noch engere Spezifikationen für die Linse vorgegeben als von den einschlägigen Prüfnormen. So ist beispielsweise die gesetzliche Vorschrift für den HV-Wert, dass HV < 1 Lux, während von manchen Scheinwerferherstellern noch darunter liegende Werte gefordert werden.

Ist gleichzeitig ein weicher Übergang an der Hell-Dunkel-Grenze gefordert, so wird hiervon auch der HV-Wert beeinflusst. Eine scharfe Hell-Dunkel-Grenze kann dazu führen, dass die Forderung nach einem weichen Übergang bei HDG ggf. nicht mehr ohne weiteres erfüllt werden kann, wenn gleichzeitig die anderen Spezifikationen des Scheinwerfers eingehalten werden.

Gemäß der eingangs genannten DE 198 44 235 A1 ist ein zusätzlicher Spiegel vorgesehen, der zwischen Abdeckblende und Linse angeordnet und so exponiert ist, dass er durch die Lichtquelle abgestrahlte Direktlichtstrahlen auf die Vorderseite der Abdeckblende zurückstrahlt, die sie in Richtung der Linse streut. Auf diese Weise wird eine abgeschwächte Hell-Dunkel-Grenze des Scheinwerfers erzielt. Andererseits steigt hierdurch natürlich die Beleuchtungsstärke im Dunkelfeld an, so dass mit einer derartigen Konstruktion der HV-Wert vermutlich nicht mehr erfüllt wird.

Andererseits ist die Herstellung infolge der notwendigen Polierbehandlung und Strahlbehandlung der Linsen relativ aufwendig und teuer.

Der Erfindung liegt somit die Aufgabe zugrunde, ein verbessertes Herstellverfahren zur Herstellung einer solchen Linse zu schaffen, womit eine einfache und kostengünstige Herstellung der Linse ermöglicht wird und gleichzeitig die vorgegebenen Spezifikationen für eine Anwendung in einem PES-Scheinwerfer eingehalten werden können. Auch soll eine geeignete Form zur Herstellung einer derartigen Linse durch Heißpressen angegeben werden.

Hinsichtlich des Verfahrens wird die Aufgabe der Erfindung durch ein Verfahren zur Herstellung einer Linse mit folgenden Schritten gelöst:
- Schmelzen eines Glases,
- Portionieren eines Gobs aus der Schmelze, Einstellen der Temperatur auf eine zum Heißpressen des Gobs geeignete Viskosität,
- Bereitstellen einer Form mit einer ersten Formfläche und mindestens einer zweiten Formfläche, wobei mindestens an der ersten Formfläche Bereiche mit unterschiedlicher Oberflächenrauigkeit gebildet sind,
- Zuführen des Gobs in die geöffnete Form,
- Heißpressen des Gobs zur Ausformung der Linse,
- Abkühlen der Linse bis auf Raumtemperatur,
- wobei eine Form verwendet wird, bei der die erste Formfläche Bereiche mit unterschiedlicher Oberflächenrauigkeit aufweist, die derart ausgebildet sind, dass beim Heißpressen der Linse an der von der ersten Formfläche abgeformten ersten Oberfläche der Linse Bereiche mit höherer Oberflächenrauigkeit mit einer mittleren Rautiefe rₘ von höchsten 10 Mikrometer ausgebildet werden, während die übrigen örtlich davon getrennten Bereiche der ersten Oberfläche der Linse eine mittlere Rautiefe rₘ von höchstens 1 Mikrometer aufweisen.

Durch das erfindungsgemäße Herstellverfahren kann eine Linse, die die vorgegebenen optischen Spezifikationen zum Einsatz in einem PES-Scheinwerfer erfüllt, lediglich durch Heißpressen hergestellt werden, ohne dass eine Nachbearbeitung der Linse durch Polieren oder Schleifen erforderlich ist. Damit ist mit dem erfindungsgemäßen Herstellverfahren eine besonders einfache, kostengünstige und reproduzierbare Herstellung gewährleistet.

Da der Heißpressvorgang von der Schmelze ausgeht und somit aufgrund der hohen Temperatur beim Zuführen des portionierten Gobs in die Pressform die Viskosität des Glases vergleichsweise niedrig ist, ist es mit diesem Verfahren möglich, eine über die Form vorgegebene Oberflächenstruktur weitgehend auf die hergestellte Linse abzubilden. Hierbei lässt sich eine über die Form vorgegebene Oberflächenrauigkeit mit einem Faktor von etwa 1 : 1,5 oder besser auf die Außenoberfläche der Linse übertragen.

Bei einer Linsenherstellung gemäß dem Stand der Technik dagegen, wie etwa aus der DE 100 43 065 A1 bekannt, ist ausgehend von kalten Gobs, die zunächst auf die zum Heißpressen geeignete Viskosität aufgeheizt werden, eine Übertragung von Oberflächenstrukturen von der Form auf die Linse nur unzureichend möglich, nämlich nur mit einem Übertragungsfaktor von etwa 1 : 3. Dies beruht auf dem Umstand, dass aufgeheizte Gobs eine erhebliche Temperaturdifferenz zwischen Kern und Oberfläche aufweisen.

Die Aufgabe der Erfindung wird ferner durch eine Form mit den Merkmalen des Anspruchs 5 gelöst.

Dagegen können die Bereiche mit niederer Oberflächenrauigkeit gemäß einer vorteilhaften Weiterbildung des erfindungsgemäßen Verfahrens als blank gepresste Bereiche ausgebildet werden.

Bei dem erfindungsgemäßen Verfahren ist eine bevorzugte Linsenform plan-konvex, wozu bei der Herstellung eine Form verwendet wird, deren erste Formfläche konvex ausgebildet ist, während die zweite Formfläche annähernd plan ausgebildet ist.

In vorteilhafter Weiterbildung des erfindungsgemäßen Verfahrens wird die Linse innerhalb der Form während des Heißpressvorgangs zumindest an einer ihrer Außenoberflächen auf eine Temperatur unterhalb der Glastransformationstemperatur T_{g} abgekühlt.

Auf diese Weise ist eine sichere und dauerhafte Formgebung während des Heißpressvorgangs gewährleistet.

Eine erfindungsgemäße Form kann beispielsweise durch einen Drehvorgang kombiniert mit einem Erodier- oder Strahlvorgang für die Bereiche erhöhter Oberflächenrauigkeit erfolgen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Explosionsdarstellung einer Beleuchtungseinrichtung in Form eines PES-Scheinwerfers;
- Fig. 2: den Strahlengang des Scheinwerfers gemäß Fig. 1;
- Fig. 3: einen mit Abstand vor der Beleuchtungseinrichtung gemäß Fig. 1 angeordneten Messschirm, aus dem die gemäß den einschlägigen Messvorschriften vorgegebenen Zonen entnehmbar sind;
- Fig. 4: eine erste Ausführung einer nach dem erfindungsgemäßen Verfahren hergestellten Linse in der Seitenansicht;
- Fig. 5: eine erste Abwandlung der Linse gemäß Fig. 4;
- Fig. 6: eine zweite Abwandlung der Linse gemäß Fig. 4;
- Fig. 7: eine dritte Abwandlung der Linse gemäß Fig. 4;
- Fig. 8: eine Aufsicht auf die Linse gemäß Fig. 4 in schematischer Darstellung, in der zusätzliche ringförmige Strukturen erkennbar sind;
- Fig. 9: eine Aufsicht auf eine Levitationsform im Zuge der Linsenherstellung zur Unterstützung eines Gobs auf einem Gasschleier;
- Fig. 10: eine Seitenansicht der Levitationsform gemäß Fig. 9 nebst einem darüber durch einen Gasfluss in der Schwebe gehaltenen Gob; und
- Fig. 11: eine schematische Schnittdarstellung einer erfindungsgemäßen Form zur Herstellung einer Linse durch Heißpressen.

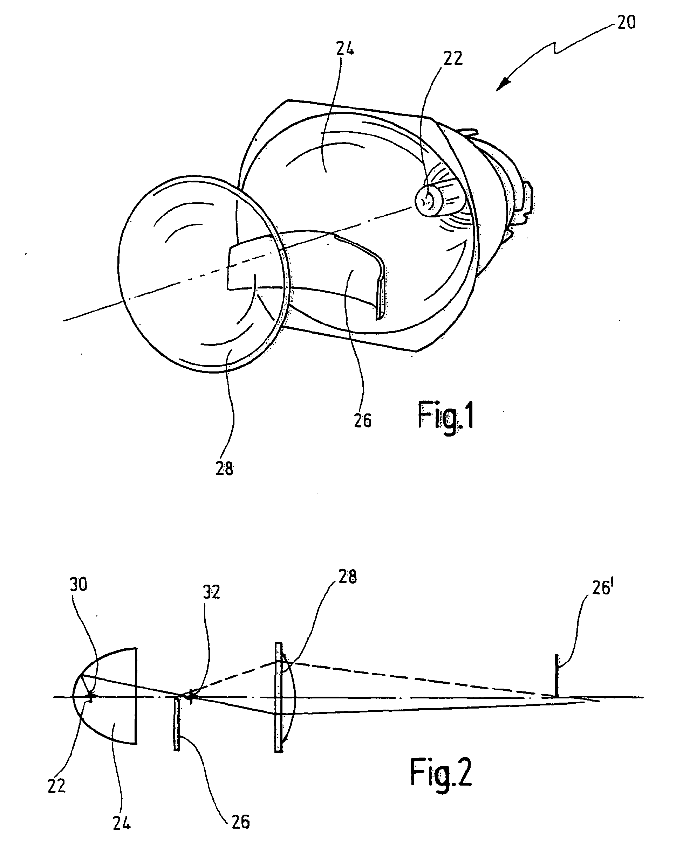

Ein PES-Scheinwerfer ist in Fig. 1 dargestellt und insgesamt mit der Ziffer 20 bezeichnet. Der PES-Scheinwerfer 20 besteht aus einem Poly-Ellipsoid-Reflektor 24, einer Lichtquelle 22, etwa in Form einer Halogenlampe, aus einer Blende 26 und aus einer Linse 28. Die Blende 26 ist im Strahlengang zwischen der Lichtquelle 22 und der Linse 28 angeordnet. Die üblicherweise benutzten Blenden 26 schatten die untere Hälfte des Strahlenbündels ab, so dass das Scheinwerferlicht nach Austritt hinter der Linse 28 im Wesentlichen nach unten gerichtet ist. Durch die Abstufung der Oberkante der Blende 26 wird erreicht, dass der Lichtstrahl insbesondere nach rechts unten gelenkt wird, um den Gegenverkehr möglichst wenig zu blenden.

Der Strahlengang eines PES-Scheinwerfers ist in Fig. 2 dargestellt. In einem ersten Brennpunkt 30 des Reflektors 24 ist eine Lampe 22 angeordnet. Durch die ellipsoide Form des Reflektors 24 wird das Licht in einem zweiten Brennpunkt 32 fokussiert, der kurz hinter der Blende 26 liegt. Danach passieren die einzelnen Lichtstrahlen die Linse 28 und erzeugen eine Abbildung 26' der Blende 26 etwa in einer Entfernung von ca. 10 m.

Bei der Linse 28 handelt es sich um eine plan-konvexe Linse, die an ihrer ersten Oberfläche 34 konvex ausgebildet ist und an der zweiten gegenüberliegenden Oberfläche 36 annähernd plan ausgebildet ist. Die Linse 28 weist einen umlaufenden Befestigungsrand 38 auf, der nicht mehr zur optisch wirksamen Oberfläche gehört. Die Linse 28 besteht bevorzugt aus Glas, das durch Heißpressen hergestellt wurde, beispielsweise aus dem Glas B270 (gemäß Schott-Spezifikation).

Die Linse 28 weist nun an ihrer konvexen Seite, d.h. an ihrer ersten Oberfläche 34, einen Randbereich 40 auf, der sich vom Außenumfang D aus ringförmig nach innen erstreckt und an den sich ein zweiter Bereich 42 anschließt, der eine erhöhte optische Streuwirkung bzw. erhöhte Oberflächenrauigkeit aufweist. Während der Randbereich 40 glatt ist, also optisch blank, besitzt der Bereich 42 eine erhöhte Oberflächenrauigkeit mit einer mittleren Rauhtiefe rₘ von höchstens 10 Mikrometern, die vorzugsweise in der Größenordnung zwischen etwa 3 und 5 Mikrometer liegt. Dagegen hat der glatte Randbereich 40 eine Rauhtiefe, die mehr als eine Größenordnung darunter liegt, etwa im Bereich von etwa 400 nm.

Der Randbereich 40 weist einen Durchmesser d auf, der sich über einen Bereich von D ≤ d ≤ 0,65 D erstreckt, vorzugsweise über einen Bereich D ≤ d ≤ 0,75 D erstreckt, besonders bevorzugt über einen Bereich von etwa D ≤ d ≤ 0,8 D, wobei D der Außendurchmesser des optisch wirksamen Bereiches ist. Für gängige PES-Scheinwerfer werden derartige Linsen mit einem Durchmesser von etwa 30 bis 70 mm hergestellt. Bei einem Linsendurchmesser D von 70 mm könnte sich der Randbereich 40 also beispielsweise von 70 mm bis zu 56 mm Durchmesser erstrecken. Dadurch, dass die Linse 28 im Randbereich 40 glatt, d.h. optisch blank, ist und im mittleren Bereich 42 eine erhöhte Oberflächenrauigkeit aufweist, kann sowohl die Einhaltung des HV-Wertes als auch die Einhaltung des HDG-Wertes gewährleistet werden, ohne dass hierzu weitere Maßnahmen erforderlich sind. Erfindungsgemäß kann eine derartige Linse 28 nunmehr lediglich durch einen Heißpressvorgang hergestellt werden, ohne dass es hierzu einer Nachbearbeitung etwa durch Schleifen, Polieren, Sandstrahlen oder dergleichen bedarf.

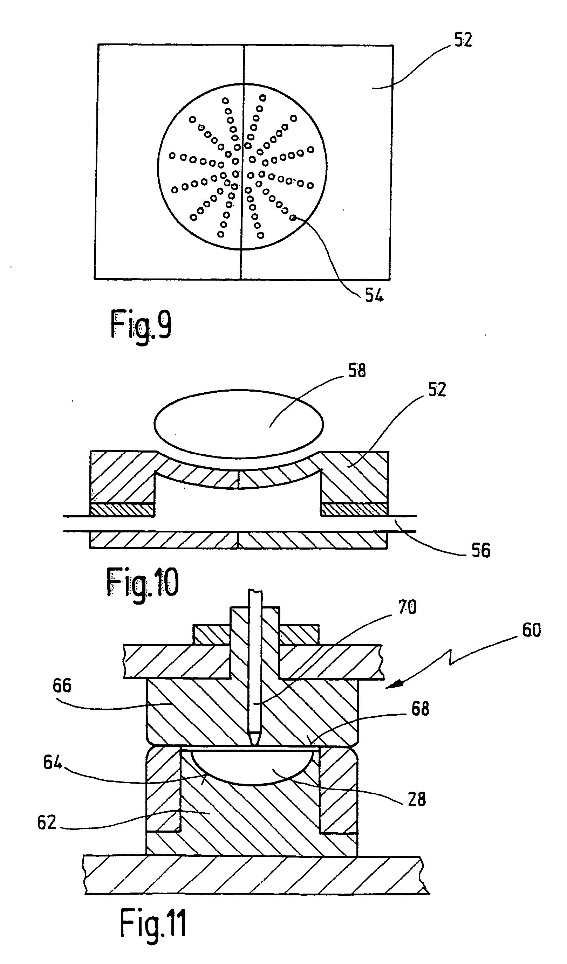

Ein derartiges Herstellverfahren wird im Folgenden kurz anhand der Figuren 9 bis 11 erläutert.

Zunächst wird ein geeignetes Glas, z.B. B270, in einem Schmelzofen erschmolzen, was bei einer Viskosität im Bereich von etwa 10³ bis etwa 10⁴ Poise erfolgt. Bei dem genannten Glas kann dies etwa bei einer Temperatur von 1110 °C durchgeführt werden. Nach dem Erschmelzen des Glases erfolgt eine Portionierung einzelner Glasmengen, die für einen nachfolgenden Heißpressvorgang zur Linsenherstellung geeignet sind. Derartig portionierte Glasmassen werden als so genannte "Gobs" bezeichnet. Die Portionierung zur Erzeugung eines Gobs erfolgt vorzugsweise mittels einer Glasschere an einem geeigneten Auslauf aus der Schmelzwanne. Das Gob gelangt nun auf ein Gasbett oder eine Levitationsform 52 gemäß der Figuren 9 bzw. 10, auf der das Gob 58 durch über Gasdüsen 54 ausströmendes Gas in der Schwebe gehalten wird. Infolge der wirksamen Gravitationskräfte und seiner relativ niedrigen Viskosität nimmt das Gob eine annähernde Linsenform ein, wie in Fig. 10 angedeutet. Das über die Gasdüsen 54 austretende Gas wird über einen Zuführkanal 56 von unten her in die Levitationsform 52 zugeführt. Je nach Glastyp kann es sich bei dem zugeführten Gas hierbei um Luft handeln oder um ein Schutzgas, wie beispielsweise Stickstoff.

Von der Levitationsform 52 wird das Gob 58 anschließend in eine Pressform überführt, die in Fig. 11 insgesamt mit der Ziffer 60 angedeutet ist.

Es versteht sich, dass die in Fig. 11 gezeigte Pressform lediglich rein beispielhafter Natur ist und dass Details, wie Ausstoßer, Entgasungskanäle und dergleichen nicht gezeigt sind, da es hierauf im vorliegenden Fall nicht ankommt. Die Pressform 60 weist eine erste Formhälfte 62 auf, in der mit einer ersten Formfläche 64 der konvexe Teil der zu pressenden Linse 28 ausgebildet ist. Eine zweite Formhälfte 66 weist eine zweite Formfläche 68 auf, mittels der die plane Seite der Linse 28 erzeugt wird. In der oben angeordneten zweiten Formhälfte 66 ist auch ein zentraler Kanal 70 vorgesehen, über den eine Entlüftung erfolgen kann.

Die erste Formfläche 64 ist nun in geeigneter Weise ausgestaltet, so dass die bei dem Heißpressvorgang hergestellte Linse 28 an ihrer konvexen Seite den glatten Randbereich 40 und den zentralen Bereich 42 mit erhöhter optischer Streuwirkung erhält. Die Formfläche 64 kann also in geeigneter Weise oberflächenbehandelt werden und an der vorbestimmten Stelle aufgeraut werden, um so ohne eine spätere Nachbehandlung die spätere Oberflächenrauigkeit bzw. optische Streuwirkung an der fertigen Linse am gewünschten geometrischen Ort zu erzeugen. Die beiden Formhälften 62, 66 werden durch geeignete Verfahren, wie etwa Drehen, Fräsen, Erodieren, Laserbearbeitung etc. bearbeitet. Die Bereiche, an denen die Linsenoberfläche glatt ausgebildet sein soll, werden gegebenenfalls poliert oder geschliffen, um die gewünschte Oberflächenrauigkeit zu erreichen. Eine zu glatte Oberfläche muss gleichfalls vermieden werden, da es sonst beim Heißpressvorgang zu einem Kleben an der Form kommen würde. Die Bereiche mit erhöhter Oberflächenrauigkeit können etwa durch ein Strahlverfahren (z.B. Glaskugelstrahlen), durch ein Erodierverfahren, mittels Laserbearbeitung oder in sonstiger Weise erzeugt werden.

Das Herstellverfahren läuft nun so, dass nach dem Portionieren eines Gobs 58 aus der Schmelzwanne auf der Levitationsform 52 zunächst eine für den nachfolgenden Heißpressvorgang geeignete Viskosität eingestellt wird, die etwa bei 10^{3,3} Poise liegt, was bei der Verwendung des Glases B270 einer Temperatur von etwa 950 bis 1000 °C entspricht. Der nachfolgende Heißpressvorgang erfolgt in einem Viskositätsbereich von etwa 10⁸ bis 10¹² Poise, beispielsweise bei etwa 10^{9,6} Poise im Falle des Glases B270.

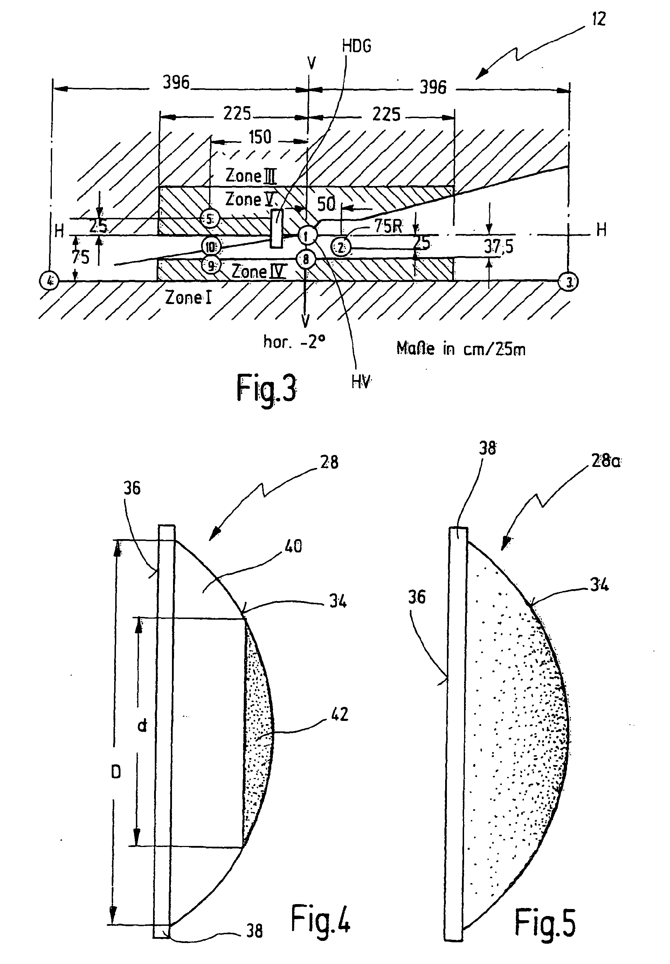

Eine Abwandlung einer Linse ist in Fig. 5 dargestellt und insgesamt mit der Ziffer 28a bezeichnet.

Während bei der Ausführung gemäß Fig. 4 der glatte Randbereich 40 klar von dem zentralen Bereich 42 mit erhöhter optischer Streuwirkung bzw. Oberflächenrauigkeit abgegrenzt ist (wobei jedoch der Übergang möglichst stetig ist, um Beugungserscheinungen zu vermeiden), weist die in Fig. 5 dargestellte Linse 28a eine stetig gradierte Oberfläche 34 auf. Die optische Streuwirkung nimmt hierbei vom äußeren Rand hin stetig zur Mitte der Linse 28a hin zu.

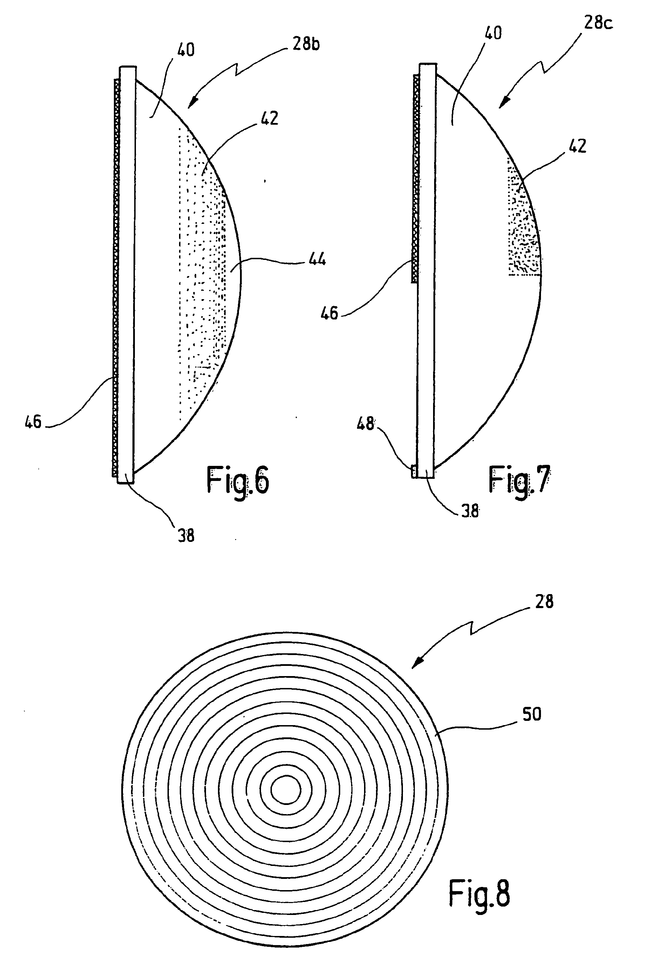

Eine weitere Abwandlung einer Linse ist in Fig. 6 dargestellt und insgesamt mit der Ziffer 28b bezeichnet. Hierbei ist wiederum an der konvexen Seite ein glatter Randbereich 40 vorgesehen, der von einem Bereich 42 mit erhöhter optischer Streuwirkung bzw. Oberflächenrauigkeit gefolgt ist. In dem Bereich 42 nimmt wiederum die Oberflächenrauigkeit vom größeren Durchmesser zur Mitte hin zu. Im Unterschied zu der Linse 28a gemäß Fig. 5 ist jedoch ein kleiner zentraler Bereich 44 der Linse 28b auf der konvexen Seite glatt ausgebildet.

Dies nutzt den Umstand aus, dass der zentrale Bereich einer Linse beim PES-Scheinwerfer praktisch keinerlei Auswirkungen auf den HV-Wert und auf den HDG-Wert hat.

Zusätzlich kann nun die Linse 28b gemäß Fig. 6 etwa auf ihrer planen Seite mit einem diffraktiven Element 46 versehen sein. Hierbei kann es sich etwa um eine Folie handeln, die auf die plane Seite aufgeklebt wird. Bekanntlich lassen sich durch ein diffraktives Element bestimmte Eigenschaften der Linse 28b durch die Beugungseffekte vorteilhaft beeinflussen. So kann beispielsweise ein Farbsaum, der durch die Farbdispersion der Linse entsteht, durch ein diffraktives Element reduziert werden.

In Fig. 7 ist eine weitere Variante einer Linse dargestellt und insgesamt mit der Ziffer 28c bezeichnet. Hierbei ist auf der konvexen Seite der Linse 28c wiederum ein glatter Randbereich vorgesehen. Ein zentraler Bereich 42 mit erhöhter optischer Streuwirkung bzw. Oberflächenrauigkeit ist allerdings nur in der oberen Hälfte der Linse ausgebildet. In entsprechender Weise ist ein diffraktives Element 46, das auf die plane Seite der Linse 28c aufgebracht ist, nur in der oberen Hälfte der Linse 28c vorgesehen. Es kann sich hierbei beispielsweise um konzentrisch angeordnete Beugungsstrukturen handeln. Damit eine derartige Linse 28c in korrekter Lage in einem Halter des Scheinwerfers eingebaut werden kann, ist am unteren Ende des Befestigungsrandes 38 eine Nase 48 zur Positionierung angeformt.

Aus der Vorderansicht gemäß Fig. 8 ist ferner noch erkennbar, dass die Linse zusätzlich etwa an ihrer konvexen Seite mit einer Ringstruktur 50 versehen sein kann. Hierbei kann es sich etwa um konzentrische Ringe im Abstand von 1 mm handeln, mit einer Tiefe im Bereich von etwa 1 bis 10 Mikrometer. Hierbei sind stetige Übergänge gewährleistet, etwa durch Ausbildung als eine Sinusschwingung. Eine derartige Ringstruktur 50 hat praktisch keinerlei optische Auswirkungen und wird lediglich teilweise von der Automobilindustrie unter Designgesichtspunkten gefordert.

Es versteht sich, dass die Linse grundsätzlich auch aus einem geeigneten Kunststoff mittels eines Press- oder Prägeverfahrens (bevorzugt UV- und Heißprägeverfahren) hergestellt werden könnte. Bezüglich der Kunststoffe werden dazu transparente und langzeitstabile Kunststoffe bevorzugt. Geeignet sind beispielsweise Polymethylmethacrylimid (PMMI), das eine hohe Temperaturbeständigkeit aufweist, oder auch Cycloolefincopolymere (COC) oder Cycloolefinpolymere (COP), die praktisch kein Wasser aufnehmen.

## Patentansprüche

1. Verfahren zur Herstellung einer Linse mit folgenden Schritten:
- Schmelzen eines Glases,
- Portionieren eines Gobs (58) aus der Schmelze,
- Einstellen der Temperatur auf eine zum Heißpressen des Gobs (58) geeignete Viskosität,
- Bereitstellen einer Form (60) mit einer ersten Formfläche (64) und mindestens einer zweiten Formfläche (68), wobei mindestens an der ersten Formfläche (64) Bereiche mit unterschiedlicher Oberflächenrauigkeit gebildet sind,
- Zuführen des Gobs (58) in die geöffnete Form (60),
- Heißpressen des Gobs (58) zur Ausformung der Linse,
- Abkühlen der Linse bis auf Raumtemperatur,
**dadurch gekennzeichnet, dass**
eine Form verwendet wird, bei der die erste Formfläche (64) Bereiche mit unterschiedlicher Oberflächenrauhigkeit aufweist, die derart ausgebildet sind, dass beim Heißpressen der Linse (28, 28a, 28b, 28c) an der von der ersten Formfläche (64) abgeformten ersten Oberfläche der Linse Bereiche mit höherer Oberflächenrauigkeit mit einer mittleren Rautiefe rₘ von höchsten 10 Mikrometer ausgebildet werden, während die übrigen örtlich davon getrennten Bereiche der ersten Oberfläche der Linse (28, 28a, 28b, 28c) eine mittlere Rautiefe rₘ von höchstens 1 Mikrometer aufweisen.

2. Verfahren nach Anspruch 1, bei dem die Bereiche (40) mit niedrigerer Oberflächenrauigkeit zum Blankpressen der Linse verwendet werden.

3. Verfahren nach Anspruch 1 oder 2, bei dem eine Form (60) verwendet wird, deren erste Formfläche (64) konvex ausgebildet ist, während die zweite Formfläche (68) annähernd plan ausgebildet ist.

4. Verfahren nach einem der Ansprüche 1 bis 3 bei dem die Linse (28, 28a, 28b, 28c) innerhalb der Form (60) während des Heißpressvorgangs zumindest an einer ihrer Außenoberflächen bis auf eine Temperatur unterhalb der Glastransformationstemperatur T_{g} abgekühlt wird.

5. Form zum Heißpressen einer Linse (28, 28a, 28b, 28c) mit einer ersten Formfläche (64) und mindestens einer zweiten Formfläche (68), wobei die erste Formfläche (64) Bereiche mit unterschiedlicher Oberflächenrauhigkeit aufweist, die derart ausgebildet sind, dass beim Heißpressen der Linse (28, 28a, 28b, 28c) an der von der ersten Formfläche (64) abgeformten ersten Oberfläche der Linse Bereiche mit höherer Oberflächenrauigkeit mit einer mittleren Rauhtiefe rₘ von höchsten 10 Mikrometer ausgebildet werden, während die übrigen örtlich davon getrennten Bereiche der ersten Oberfläche der Linse (28, 28a, 28b, 28c) eine mittlere Rautiefe rₘ von höchstens 1 Mikrometer aufweisen.

## Claims

1. A method for manufacturing a lens comprising the following steps:
- melting a glass;
- portioning a gob (58) from the melt,
- adjusting the temperature to a viscosity suited for hot-pressing of the gob (58);
- presenting a mold (60) with a first mold surface (64) and at least one second mold surface (68), with areas of different surface roughness values being provided at least on the first mold surface (64);
- feeding the gob (58) into the open mold (60);
- hot-pressing the gob (58) for generation of the lens;
- cooling the lens down to room temperature;
**characterized in that**
a mold is used where the areas of the first surface (64), exhibiting different surface roughness values, are configured in such a way that during hot-pressing of the lens (28, 28a, 28b, 28c) areas of higher surface roughness with a mean surface roughness rₘ of maximally 10 micrometers are formed on the first surface of the lens, being molded by the first surface of the mold (64), while the other areas of the first lens (28, 28a, 28b, 28c) area locally separated therefrom have a mean surface roughness rₘ of maximally 1 micrometer.

2. The method of claim 1, wherein the areas (40) of lower surface roughness are used for bright-pressing of the lens.

3. The method of claim 1 or 2, wherein a mold (60) is used the first mold surface (64) of which has a convex shape while its second surface (68) has an approximately planar shape.

4. The method of any of claims 1 to 3, wherein the lens (28, 28a, 28b, 28c) is cooled down in the mold (60) during the hot-pressing process to a temperature below the glass transformation temperature T_{g} at least at one of its outer surfaces.

5. A mold for hot-pressing of a lens (28, 28a, 28b, 28c) having a first mold surface (64) and at least one second mold surface (68), where areas of different surface roughness values are provided at least on the first mold surface (64) which are designed so that during hot-pressing of the lens (28, 28a, 28b, 28c) at the surface of the lens formed by the first mold surface (64) areas are provided having a higher surface roughness with a mean surface roughness rₘ of maximally 10 micrometers, while the other areas of the lens (28, 28a, 28b, 28c) locally separated therefrom have a mean surface roughness of maximally 1 micrometer.

## Revendications

1. Procédé de réalisation d'une lentille, comportant les étapes suivantes :
- fusion d'un verre,
- prélèvement d'une paraison (58) hors de la matière en fusion,
- ajustement de la température à une viscosité appropriée au pressage à chaud de la paraison (58),
- mise à disposition d'un moule (60) avec une première surface de moulage (64) et au moins une deuxième surface de moulage (68), des zones de rugosité superficielle différente étant formées sur la première surface de moulage (64),
- acheminement de la paraison (58) dans le moule (60) ouvert,
- pressage à chaud de la paraison (58) en vue du formage de la lentille,
- refroidissement de la lentille jusqu'à la température ambiante,
**caractérisé en ce que**
l'on utilise un moule, dans lequel la première surface de moulage (64) comporte des zones avec une rugosité superficielle différente, lesquelles sont réalisées de telle sorte que, lors du pressage à chaud de la lentille (28, 28a, 28b, 28c), des zones avec une rugosité superficielle élevée avec une profondeur de rugosité moyenne rₘ de 10 micromètres maximum sont réalisées sur la première surface de la lentille, moulée par la première surface de moulage (64), tandis que les autres zones, séparées localement de celles-ci, sur la première surface de la lentille (28, 28a, 28b, 28c) ont une rugosité moyenne rₘ de 1 micromètre maximum.

2. Procédé selon la revendication 1, dans lequel les zones (40) avec une faible rugosité superficielle sont utilisées pour le pressage à froid de la lentille.

3. Procédé selon la revendication 1 ou 2, dans lequel on utilise un moule (60) dont la première surface de moulage (64) est convexe, tandis que la deuxième surface de moulage (68) est à peu près plane.

4. Procédé selon l'une quelconque des revendications 1 à 3, dans lequel la lentille (28, 28a, 28b, 28c) à l'intérieur du moule (60) pendant le processus de pressage à chaud, sur au moins une de ses surfaces extérieures, est refroidie, sur au moins une de ses surfaces extérieures, jusqu'à une température inférieure à la température de transformation du verre T_{g}.

5. Moule pour le pressage à chaud d'une lentille (28, 28a, 28b, 28c), comportant au moins une première surface de moulage (64) et au moins une deuxième surface de moulage (68), la première surface de moulage (64) comportant des zones avec une rugosité superficielle différente, lesquelles sont réalisées de telle sorte que, lors du pressage à chaud de la lentille (28, 28a, 28b, 28c), des zones avec une rugosité superficielle élevée avec une profondeur de rugosité moyenne rₘ de 10 micromètres maximum sont réalisées sur la première surface de la lentille, moulée par la première surface de moulage (64), tandis que les autres zones, séparées localement de celles-ci, sur la première surface de la lentille (28, 28a, 28b, 28c) ont une rugosité moyenne rₘ de 1 micromètre maximum.
